Europäisches Patentamt

(19) European Patent Office

Office européen des brevets

(11) **EP 0 952 536 A1**

(12) **EUROPEAN PATENT APPLICATION**

(43) Date of publication:
27.10.1999 Bulletin 1999/43

(51) Int. Cl.$^6$: **G06F 17/60**

(21) Application number: 98303047.9

(22) Date of filing: 21.04.1998

(84) Designated Contracting States:
AT BE CH CY DE DK ES FI FR GB GR IE IT LI LU
MC NL PT SE
Designated Extension States:
AL LT LV MK RO SI

(71) Applicant:
Hewlett-Packard Company
Palo Alto, California 94304 (US)

(72) Inventors:
• Preist, Christoper
Bristol BS6 5EH (GB)

• Van Tol, Maarten
2613 SH Delft (NL)

(74) Representative:
Lawman, Matthew John Mitchell et al
Hewlett-Packard Limited,
IP Section,
Building 2,
Filton Road
Stoke Gifford, Bristol BS12 6QZ (GB)

(54) **System and method for automated trading**

(57)   In a distributed computing environment, processes (110-150) are connected via the Internet (100) and participate in an automated market place. In the market place, a mediation process (110) receives bids and offers from negotiation processes (120, 130, 150), and completes those transactions that have matching bid/offer values. Further, in some embodiments, the mediation process (110) publishes information relating to completed transactions. The negotiation processes comprise buyer processes (120), seller processes (130) and speculator processes (150), which, given a reservation price, calculate and submit offers for the goods or resources. The negotiation processes make their calculations, in part, on the basis of the information published by the mediation process (110). Further, the negotiation processes make their calculations using heuristic algorithms and learning rules, substantially independently of user intervention.

FIGURE 1.

EP 0 952 536 A1

## Description

### Technical Field

The present invention is generally in the field of automated market places and provides a data processing system and method for controlling a data processing system, which is particularly, but not exclusively, suited to controlling market places in which decisions to trade are substantially automated.

### Background Art

May computer-based systems have been proposed for assisting with buy and sell transactions in a defined market place;

In US 5,349,324 (Clearwater), a auction-based control system is described, which is particularly suited to air-conditioning control. A central system receives bids for conditioned air from multiple zone or room systems. The central processing system then calculates an auction price on the basis of the received bids and controls air delivery system to deliver a amount of air relating to a function of the bids and the auction price to each respective zone or room. The system depends on the central system behaving in a trusted manner, as would be the case where the whole system is owned and controlled by a single person or company. It also depends on the zone or room systems making their reservation values explicit to the central system.

US 5,640,569 (Miller et al.) describes a diverse goods arbitration system for allocating computer resources in response to receipt of bids from plural requesters. The system determines which bids are successful, distributes resources accordingly and allocates costs as a function of a winning bid price and the overall bid prices. Again, bidders need to make their reservation values public or the arbitration system needs to be trusted to enact resource and cost allocation properly.

In US 5,715,402 (Popolo), there is described a system for managing steel inventories in order to reduce the time and expense associated with selling prime and secondary steel that is no longer needed for the original intended application. The system permits sellers to post a detailed specification of a item for sale and permits buyers to browse or search the posted inventory to locate items filling specific needs. A buyer may bid on part or all of an item posted and the seller may accept or reject any bid. The buyer and seller engage in a auction by electronic mail and optionally by facsimile. The detailed specifications of the item may be expressed in a variety of units of measure. Regardless, of unit of measure used by a seller in posting a item, the system performs the necessary conversions to display information to an interested buyer in a unit of measure set by the buyer. A hierarchical menu structure permits ease of use in selecting available options during posting or bidding a item. This system assists with transactions, rather than performing transactions itself.

### Disclosure of the Invention

In accordance with a first aspect, the present invention aims to improve on known systems by providing a data processing system comprising:

one or more negotiation processes arranged for determining a current value for a specific good or resource and for submitting a bid and/or offer of the current value therefor;

a mediation process arranged for receiving one or more bids and/or one or more offers for the good or resource from one or more negotiation processes or other sources and for completing transactions on the basis thereof; and

communications means for providing communications channels between the mediation process and each negotiation process or other source for carrying bid and/or offer information therebetween,
wherein each negotiation process is arranged to determine current values automatically relative to a reservation value and by observing available bid, offer, and/or transaction information.

Preferably, the system applies a heuristic algorithm and a learning rule by which negotiation processes determine current values.

The system may preferably also be arranged to operate in discrete rounds, wherein, in a round, a maximum of one bid and/or offer for a specified unit of the good or resource is received by the mediation process from each negotiation process, and wherein the mediation process is arranged to complete transactions on the basis thereof. Further, the mediation process may be arranged to publish at least some information representative of bids, offers and/or transactions at the end of each round.

In a preferred embodiment, the mediation process is arranged to receive at least some bids and/or offers in advance of completing any transactions, in order to establish an equilibrium value for transactions.

In accordance with a second aspect, the present invention provides a method of controlling a data processing system comprising one or more negotiation processes, a mediation process and a communications means for providing communications channels between the mediation process and each negotiation process for carting bid and/or offer information therebetween, the method comprising the steps of:

each negotiation process determining a current value for a specific good or resource and submitting to the mediation process a bid and/or offer signal of the current value therefor;

the mediation process receiving each bid and or offer signal ad completing transactions on the basis thereof,
wherein each negotiation process is arranged to determine bid and/or offer values automatically relative to a reservation value ad by observing available bid, offer, ad/or transaction information.

Other aspects and features of the present invention will become apparent from the following description and claims.

Brief Description of the Drawings

For a better understanding of the invention and to show how the same may be carried into effect, there will now be described by way of example only, specific embodiments, methods and processes according to the present invention with reference to the accompanying drawings in which:

Figure 1 is a schematic diagram of a system in which an embodiment of the present invention can operate; and
Figure 2 is a flow diagram, which illustrates the steps involved in operating an auction in accordance with the embodiment to be described.

Best Mode for Carrying out the Invention, & Industrial Applicability

There will now be described by way of example the best mode contemplated by the inventors for carrying out the invention. In the following description numerous specific details are set forth in order to provide a thorough understanding of the present invention. It will be apparent however, to one skilled in the art, that the present invention may be practised without using these specific details. In other instances, well-known methods ad structures have not been described in detail so as not to unnecessarily obscure the present invention.

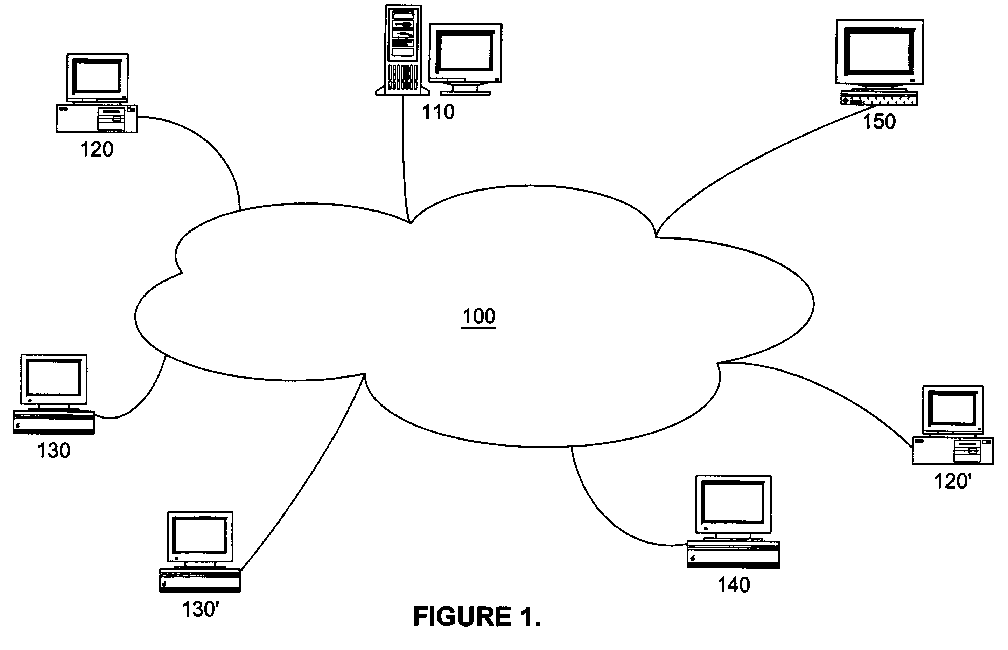

Figure 1 is a diagram, which illustrates one exemplary scenario in which the present invention may be operated. In this case, the resource being bought ad sold is electricity. Clearly, it is not normal or practical to distribute electricity selectively or at different levels, so, in this example, transactions relate to the cost of electricity units that buyers will have to pay for the electricity they use. In other scenarios, for example communications bandwidth allocation, it would be possible to allocate the bandwidth itself. In particular, in the case of ATM communications, bandwidth could be brought to support a number of services at a certain level of quality, for example picture resolution or refresh rate in the case of video. In the present example, relating to electricity, it is assumed that the amount of electricity required overall never exceeds the capacity of the electricity generating companies, or sellers in the market place, which is a realistic model.
In Figure 1, a mediation process 110 is connected via a communications network 100 to two buyer processes 120, two seller processes 130, a speculator process 150 and a billing process 140. This overall system can be thought of as an electronic market place. In a practical scenario, there would typically be may more buyers and sellers represented in the market place, and there may or may not be any speculators.
A buyer process 120 typically represents a large company or industrial establishment, which has a relatively large electricity requirement. This example could in theory also be applied right down to the scale of individual, residential electricity customers. However, as the current level of technology stands, this would not seem an appropriate economy of scale. The task of the buyer process 120 is to buy electricity at the minimum possible price.
A seller process 130 typically represents electricity generating company, or an agent acting on behalf thereof. The task of the seller process 130 is to sell electricity at the maximum possible price.
The billing process 140 is required to extract from the market place and store for historic reference all completed transaction information. On the basis of the information, the billing process 140 bills buyers for electricity units purchased in the market. Alternatively, or additionally, the billing process 140 may provide statement information to all participants in the market place. The billing process 140 may go a step further and facilitate electronic payment by buyers to sellers. Indeed, buyers may only be allowed to participate in the market place once they have lodged a certain amount of funds with the billing process 140. Also, the billing process 140 may be associated with the mediation process 110, rather than being separate, or may comprise a number of separate processes, or a single distributed process, associated with each seller process 130. Further, the billing process 140 may be on-line and settle payment for each individual transaction as it occurs, or may be 'off-line' and settle payment for all transactions, for example, in each week, month or quarter. The exact details of an appropriate billing process 140 are not core to the present invention and will, thus, not be considered herein in any further detail.
The speculator process 150 can be a buyer process, a seller process, or both at the same time. For example, the speculator process 150 may be arranged to buy electricity when the cost is low, with which, for example, it pumps water to a high reservoir, and may sell electricity when the cost is high, and generate electricity by allowing the water to drive a hydroelectric generator connected to the appropriate electricity grid system. Typically, the speculator process 150 will be, or will represent, an electricity generating company, as it needs to be able to react to electricity price by storing or generating energy.
Buyer, seller and speculator processes are collectively known in this description as negotiation processes.

The mediation process 110 is an independent process, for example, owned by a government electricity regulator, which receives bids and offers, and completes transaction on the basis thereof. The operation of the mediation process 110 is transparent to the buyer, seller and speculator agents, as will be described in more detail below.

Each process typically comprises appropriate software routines, for example written in C++, which run on one or more conventional computer systems and are able to send and receive information to and from the network. The network in this example comprises the Internet, which is an extremely convenient means by which information can be communicated. However, there is no restriction on the type of network infrastructure that can be used, as long as all participants in the market place can connect and interact fairly.

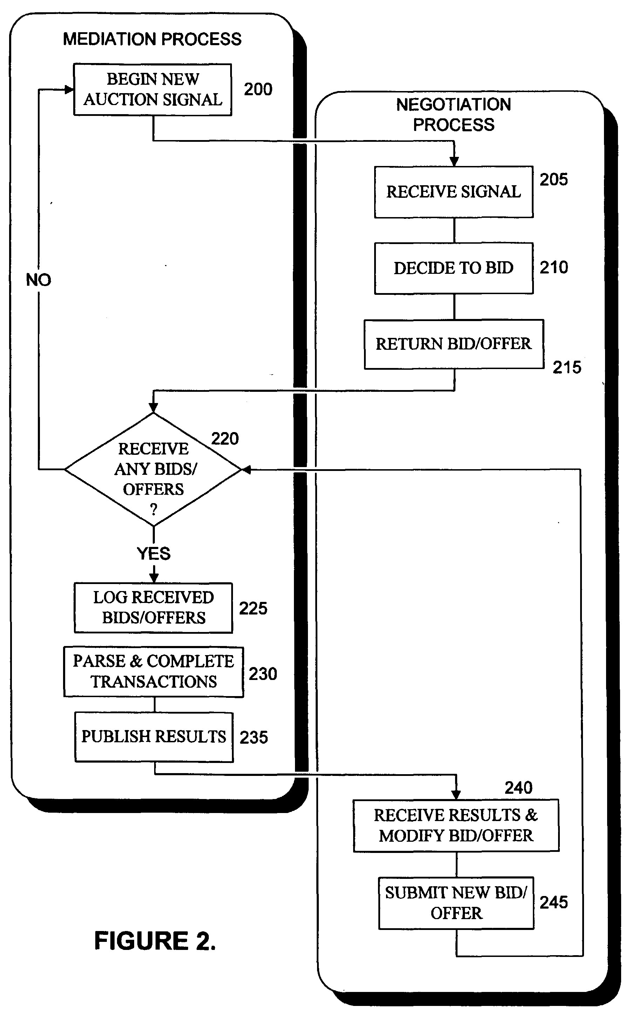

An example of an electricity auction will now be described with reference to the flow diagram in Figure 2. The auction involves a mediation process 110 and multiple negotiation processes. However, for reasons of clarity, Figure 2 only shows the process followed by the mediation process 110 and one negotiation process.

In step 200, the mediation process 110 publishes a signal that a new auction is beginning. In the present example, an auction is defined by a start point and is split into a number of buying and selling 'rounds'. In each round, each negotiation process is only able to make one bid and/or offer for electricity, and the mediation process 110 completes transactions for all bids, which meet or exceed an offer. The mediation process 110 is able to receive any number of bids and/or offers in each round. The auction continues running until no more new bids or offers are received. At such a point, the mediation process 110 signals the start of a new auction. A restriction on the buyer and seller processes in the present example is that, to participate, they must submit a bid and/or offer at the start of an auction. In other words, negotiation processes cannot enter into an auction halfvay through. This restriction is one of many different or alternative restrictions or rules, which can be applied by the mediation process 110, to define the operation of the auction, and will be known to the participants in the market place. However, it will be appreciated that any particular restrictions or rules are included purely to define the operation of a particular market place, and should not be treated as essential features of the invention.

In the present description, 'publishes' means that the mediation process 110 makes information available to all participants, or potential participants, in the market place. Publishing may imply that a general message is transmitted onto the communications network and can be received by all interested parties who are 'listening' to the network; the network operating in a similar fashion to a communications 'bus', such as an Ethernet. Alternatively, the mediation process 110 may send a message to each individual process, which has, for example, previously been through an appropriate registration procedure. Any other means for getting information to all participants would constitute publication as defined herein.

In step 205, the negotiation processes receive the signal from the mediation process 110 that a new auction is beginning. In Step 210, each negotiation process makes a decision on whether it will return a bid and/or offer to the mediation process 110, and in step 215, the negotiation processes return bid and/or offer signals. Typically, the seller processes 130 in this example will always want to sell electricity, as it is most cost effective to constantly generate at least some electricity. A decision to return an initial bid and/or offer will determine whether the respective negotiation process is allowed to participate in the new auction. The decision process will be considered in more detail below.

In step 220, the mediation process 110 receives returned bid and offer signals. If, however, no bids or offers are received, the auction ends and a new auction is initiated in step 200. For each returned bid and offer signal, the mediation process 110 logs the bid value, the offer value and the respective negotiation process's identity in a database of participant negotiation processes for the current auction in step 225. For the remainder of the auction, only bid and offer signals from negotiation processes whose identities are logged in the database for that auction are processed. In the current example, the mediation process 110 waits for a defined period of time for all bids and offers to be received. Obviously, for fairness reasons, the period of time has to be sufficient for negotiation processes to be able to consider and respond to the beginning of the new auction signal, including two-way communication network propagation delays. This period can be set heuristically, by measuring the round-trip delays between the mediation process 110 and the negotiation processes and allowing a reasonable amount of time for processing. Alternatively, each negotiation process, irrespective of whether it wishes to participate or not in an auction, can be programmed to reply, with a bid, and/or an offer or a 'not interested' message. Then, the mediation process 110 will continue with the next step only when all negotiation processes have replied. Of course, in this case, there will need to be a 'time-out' period, for example set to twice the normally expected reply period, to manage cases where no bids or offers are made, or where one or more negotiation processes have gone 'off-line' for any reason.

Next, in step 230, the mediation process 110 parses the bid and offer information and matches and marks as complete any transactions in which a bid exceeds or meets an offer. In the present case, where there are a number of bids and offers which are transactable in any one round, the highest bid is matched with the lowest offer, and the transaction price is set to be the average of the two prices. Then, the next highest bid is matched with the next lowest offer, and so on.

Once all possible transactions have been completed, in step 235 the mediation process 110 publishes results of the round and deletes from the database the details of any completed transactions, including deleting all respective bid and offer information. In the present embodiment, the mediation process 110 publishes the prices at which transactions have occurred. Additionally, or alternatively, the mediation process 110 publishes all bid and offer values received, irrespective of whether a respective transaction resulted. Obviously, if the mediation process 110 is involved with billing, any transaction information is forwarded on to a billing process 140 before being deleted.

Typically, in the first round of an auction, there will be no transactions, as it is obviously good business for a negotiation process to initially bid lower or offer higher than it would expect the actual auction price to be.

In step 240, the negotiation processes receive the published results of the last round, with which they can modify their bids and or offers, if necessary, for the next round. Then, in step 245, the negotiation processes submit new bids and/or offers. Alternatively, any negotiation process may decide not to submit a new offer. In this case, the mediation process 110 determines that the negotiation process has decided to stick with the bid or offer it made in the previous round. Thus, it is not possible, in this example, to withdraw a bid from an auction once it has been made. Also, it is possible to `improve' on a bid or an offer but it is not possible to make a bid or offer which is further from a possible transaction price; which would, in effect, be a bid withdrawal. This is another restriction of the auction, albeit again a non-essential restriction, which would be known to all participants.

The mediation process 110 receives any new bids and offers in step 220. This iterative process continues until a round is reached where the mediation process 110 does not receive any `new' bids or offers. At this point, the auction is closed, and the mediation process 110 signals the start of a new auction. Alternatively, before ending the auction completely, the mediation process 110 may publish an `auction about to close' warning to participants, in order to illicit any final bids or offers, or simply to inform the negotiation processes of the state of play.

The operation of the two basic negotiation processes, a buyer and a seller, will now be described in more detail.

In general, negotiation processes according to the present embodiment operate by modifying their current valuation of a good or resource, in this case electricity, in response to market activity. A current valuation is the value, or price, which is used in a bid or offer. The algorithm that negotiation processes use consists of heuristics that determine a target value, and a learning rule, which determines how much to adjust towards that target value.

The heuristics used can be represented by the following pseudo code:

For BUYERS;

If $S_{min} > B_{max}$ then $\tau$ becomes $B_{max} + \delta$

If $S_{min} <= B_{max}$ then $\tau$ becomes $S_{max}$

For SELLERS;

If $S_{min} > B_{max}$ then $\tau$ becomes $S_{min} - \delta$

If $S_{min} <= B_{max}$ then $\tau$ becomes $B_{max}$

where $\tau$ is the target value, $B_{max}$ and $B_{min}$ are the highest ad lowest bids at the beginning of the round, $S_{max}$ and $S_{min}$ are the highest and lowest offers at the beginning of the round and $\delta$ is a small random value. Given the target value, the agent then adjusts its current valuation towards this. The amount of this adjustment is determined by a learning rule. In the present embodiment, the learning rule used is the simplest possible: the Widrow-Hoff delta rule [1]. This simply sets the current valuation to be the previous valuation plus a certain percentage of the difference between the previous valuation and the target value. If there is no previous valuation, then the reservation value is used instead. This percentage is referred to as the learning rate.

These heuristics provide the effect that if trades are not taking place, a negotiation process attempts to be the most competitive by adjusting its current valuation towards a target value that is slightly better than its competition. If, on the other had, trades are taking place, a negotiation process adjusts the current valuation towards a target value that is the best price at which it can obtain a trade.

The effect of this algorithm is that the bid and offer curves, varying over time, quickly converge to what is known as the 'equilibrium price'. At this price, the maximum number of bids and offers can be completed and the profitability of the auction is at its optimum. In effect, at the equilibrium price, the auction transacts at the intersection of the supply and demand curve that represents the market.

In an extreme case, the learning rate could be set at 100%. Under these circumstances, a negotiation process adjusts its current valuation directly to the target valuation. This effectively means the learning rule is redundant, simplifying the negotiation process. It has been shown, however, that removing the learning rule from the operation of the negotiation processes can result in instability in market, with a threshold value that does not converge and settle. Obviously, one benefit of the invention is in having a relatively settled threshold level.

An important benefit of the present embodiment is that the mediation process 110 does not need to enact any calculations to determine a transaction price at any point. In effect, the behaviour of the negotiation processes determines the equilibrium point by default within a few rounds (the number of rounds being determined by the learning rates). Thus, since bid, offer and transaction information is published, the whole operation of the negotiation process is relatively transparent to the negotiation processes. Overall, therefore, the negotiation processes need to place relatively little trust in the mediation process 110, which makes the use of the market place far more desirable than where a mediation process 110, or equivalent, is trusted to both calculate transaction prices and enact transactions.

A further advantage of the present embodiment is that none of the negotiation processes need to make public the 'actual value' that they put on the resource or good. In the case of a seller, the actual value would typically be fixed as the actual cost of generating electricity to meet the demand. In the case of the buyer, the actual value would be specified typically as the maximum that the company or industry could pay without going over budget. The 'actual value' is often sensitive commercial information, which a company would prefer not to make public.

The actual value is also the 'reservation value' that a negotiation process applies to the good or resource: a buyer will not bid higher than its reserve value ad a seller will not offer lower than its reserve value in any particular auction. Clearly, if a buyer must meet a demand, and the market price is high, the buyer may need to increase its reserve value at some point. Typically, such variations in reservation value would be made by human intervention, based on a defined company policy. In general, however, in that buyers need to buy electricity, probably irrespective of cost (at least in the short term), the present embodiment ensures the optimum price possible in the market.

Usually, a negotiation process will be negotiating for more than one unit of the good. In such a case, it will place separate bids/offers for each unit it wishes to trade. It may have different reservation values for different numbers of units (for example, for reasons of economies of scale.). This is implemented by allowing its bids to go outside these reservation values only when it has made sufficient trades. For example, consider a negotiation process that has two goods to sell. The first good it can sell has a reserve price of 10, but the second has a reserve price of 8 because of economies of scale. It will offer two goods for sale, both with reservation values initially set to 10. When a sale is made, it adjusts the reserve price of the remaining good to be 8.

To a large extent, negotiation processes are autonomous, in that they make bids and offers in the market place substantially without third party intervention. However, there will generally be a point when a negotiation process is provided with information from a third party source, which allows it to decide whether to submit a bid and/or an offer at all, at what level an initial bid and/or offer should be made and what the reservation value should be set at.

In the present embodiment, it is fair to assume that all selling processes need to sell at least some electricity all the time, so an offer price will always be submitted at each auction. Similarly, buyer processes 120 will generally need at least some electricity all the time, so a bid will always be submitted at each auction. For selling processes, initial offer level could be set at twice the equilibrium price of the previous auction, while the initial bid level of buying processes could be set at half the equilibrium price of the previous auction.

An alternative to the above-described embodiment will now be described.

Clearly, if transactions take place in the first few rounds of an auction, before an equilibrium price has been reached, there is a possibility that buyer processes 120 may pay too much for a resource or good, or that seller processes 130 may offer goods or resources at too low a price.

It is proposed, to overcome the possibility for transactions occurring away from the equilibrium price, that the mediation process 110 carries out at least one auction (a 'dummy auction') without completing any transactions, even when they could be completed. Under these circumstances, the negotiation processes are arranged to react as normal to information published by the mediation process 110 of the bids ad offers made and of the transactions that would have occurred. Further, no negotiation process could enter or withdraw during the dummy auction(s).

The effect of this would be to remove the possibility of non-equilibrium transactions occurring, thereby improving the confidence of the buyers and sellers that they were getting the best deal. A disadvantage of this scheme is that time is wasted in enacting dummy auctions. However, as negotiation processes ad mediation process 110es can be highly efficient, we would expect that auctions take place very rapidly, for example within the space of seconds. A further significant implication of this scheme is that short term-speculators would be discouraged from participating, as it would be difficult, if not impossible, to buy low and sell high in the first few rounds where this might be possible. It would still be possible, however, to speculate between auctions, buying electricity at one, storing it, and selling it at a later one. Even though all negotiating processes will converge towards the equilibrium price, it is unlikely they will all reach it at the same moment - some may be slightly off at any given time. For this reason, it is necessary to define a threshold bad in an embodiment where dummy auctions occur. When the standard deviation of all bids and offers in a given auction falls below a certain pre-determined level, say 1% or 0.5% of the average price in that auction, then the market is considered to have reached equilibrium. At that point, then trades can take place at the average price.

The embodiments of the invention disclosed above are provided by way of example only and it is recognised that the skilled artisan would, in the light of the disclosure, be able to implement the invention in many commercially and industrially applicable ways while maintaining the essential elements of the invention as claimed hereafter.

References

[1] Rumelhart, D. E., Hinton G. E. & Williams, R. J. (1986). "Learning Internal Representations by Error Propagation". In Rumelhart, D. E. & McClelland, J. L. (Eds.), *Parallel Distributed Processing, Volume 1: Foundations*, pp. 318-362. MIT Press Bradford Books, Cambridge MA.

Claims

1. A data processing system comprising:

   one or more negotiation processes arranged for determining a current value for a specific good or resource and for submitting a bid and/or offer of the current value therefor;
   a mediation process arranged for receiving one or more bids and/or one or more offers for the good or resource from one or more negotiation processes or other sources and for completing transactions on the basis thereof; and
   communications means for providing communications channels between the mediation process and each negotiation process or other source for carrying bid and/or offer information therebetween,
   wherein each negotiation process is arranged to determine current values automatically relative to a reservation value and by observing available bid, offer, and/or transaction information.

2. A system according to claim 1, wherein each negotiation process is arranged to determine a current value in relation to a target value derived by applying a heuristic algorithm to observed bid, offer, and/or transaction information.

3. A system according to claim 2, wherein the heuristic algorithm includes:

   for buyer processes;

   If $S_{min} > B_{max}$ then $\tau$ becomes $B_{max} + \delta$

   If $S_{min} <= B_{max}$ then $\tau$ becomes $S_{max}$

   for seller processes;

   If $S_{min} > B_{max}$ then $\tau$ becomes $S_{min} - \delta$

   If $S_{min} <= B_{max}$ then $\tau$ becomes $B_{max}$

   where r is the target value, $B_{max}$ and $B_{min}$ are the highest and lowest observed bids, $S_{max}$ and $S_{min}$ are the highest and lowest observed offers and $\delta$ is a small random value.

4. A system according to claim 2 or claim 3, wherein each negotiation process is arranged to determine the current value by applying a learning rule to the target value and a prior current value.

5. A system according to any one of the preceding claims, wherein each negotiation process is arranged to keep private the reservation value.

6. A system according to any one of the preceding claims, wherein the mediation process is arranged to complete a transaction when a bid for a good or resource meets or exceeds a respective offer.

7. A system according to any one of the preceding claims, wherein the mediation process is arranged to receive bids and/or offers in discrete rounds, wherein, in a round, a maximum of one bid and/or offer for a specified unit of the good or resource is received from each negotiation process, and wherein the mediation process is arranged to complete transactions on the basis thereof.

8. A system according to claim 7, wherein the mediation process is arranged to publish at least some information representative of bids, offers and/or transactions at the end of each round.

9. A system according to any one of the preceding claims, wherein the mediation process is arranged to complete transactions in the absence of any reservation values.

10. A system according to any one of the preceding claims, wherein the mediation process is arranged to receive at least some bids and/or offers in advance of completing any transactions, in order to establish an equilibrium value for transactions.

11. A system according to claim 10, wherein the mediation process is arranged to begin completing transactions once an equilibrium value is established.

**12.** A system according to claim 10 or claim 11, wherein the mediation process is arranged to begin completing transactions once the standard deviation of the bids and/or offers falls below a specified threshold.

**13.** A system according to any one of claims 10 to 12, wherein the mediation process is arranged to publish information relating to any transactions that would have occurred.

**14.** A system according to any one of claims 10 to 13, wherein the mediation process is arranged to receive at bids and/or offers in advance of completing any transactions until either no more bids and/or offers are received or until no more bids and/or offers could result in any transactions.

**15.** A computer system arranged for operating a negotiation process in a system according to any one of the preceding claims.

**16.** A computer system arranged for operating a mediation process in a system according to any one of claims 1 to 14.

**17.** A method of controlling a data processing system comprising one or more negotiation processes, a mediation process and a communications means for providing communications channels between the mediation process and each negotiation process for carrying bid and/or offer information therebetween, the method comprising the steps of:

each negotiation process determining a current value for a specific good or resource and submitting to the mediation process a bid and/or offer signal of the current value therefor;
the mediation process receiving each bid and or offer signal and completing transactions on the basis thereof,
wherein each negotiation process is arranged to determine bid and/or offer values automatically relative to a reservation value and by observing available bid, offer, and/or transaction information.

**18.** A computer-readable data carrier having a computer program recorded thereon which, when interpreted by a data processing system, causes the system to operate in accordance with the method of claim 16.

**19.** A computer-readable data carrier having a computer program recorded thereon which, when interpreted by a data processing system, causes the system to operate in accordance with the negotiation process according to claim 17.

**20.** A computer-readable data carrier having a computer program recorded thereon which, when interpreted by a data processing system, causes the system to operate in accordance with the mediation process according to claim 17.

**21.** A computer network carrying bid, offer and/or transaction information as claimed in any one of the preceding claims.

**22.** A computer system storing bid, offer and/or transaction information as claimed in any one of the preceding claims.

FIGURE 1.

100

110

120

130

150

120'

140

130'

9

FIGURE 2.

European Patent Office

**EUROPEAN SEARCH REPORT**

Application Number

EP 98 30 3047

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | G. FAHD ET AL: "The implementation of an ebergy brokerage system using linear programming" IEEE TRANSACTIONS ON POWER SYSTEMS, vol. 7, no. 1, February 1992, pages 90-96, XP000257243 New York, US * section 2 * | 1-22 | G06F17/60 |
| A | EP 0 828 223 A (HITACHI, LTD.) 11 March 1998 * the whole document * | 1-22 | |
| D,A | US 5 640 569 A (M.S. MILLER ET AL) 17 June 1997 * the whole document * | 1-22 | |
| A | US 5 615 269 A (S. MICALI) 25 March 1997 * column 2, line 10 - column 3, line 63 * | 1-22 | |
| | | | TECHNICAL FIELDS SEARCHED (Int.Cl.6) |
| | | | G06F |

The present search report has been drawn up for all claims

| Place of search | Date of completion of the search | Examiner |
|---|---|---|
| BERLIN | 10 September 1998 | Abram, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 98 30 3047

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-1998

| Patent document cited in search report | | Publication date | Patent family member(s) | | Publication date |
|---|---|---|---|---|---|
| EP 828223 | A | 11-03-1998 | JP | 10078992 A | 24-03-1998 |
| | | | AU | 3677697 A | 12-03-1998 |
| US 5640569 | A | 17-06-1997 | NONE | | |
| US 5615269 | A | 25-03-1997 | AU | 1951497 A | 28-07-1997 |
| | | | WO | 9724833 A | 10-07-1997 |

EPO FORM P0459

For more details about this annex : see Official Journal of the European Patent Office, No. 12/82